# EUROPÄISCHE PATENTSCHRIFT

(11) **EP 0 447 651 B1**
(45) Veröffentlichungstag und Bekanntmachung des Hinweises auf die Patenterteilung: **08.09.1993**
(21) Anmeldenummer: 90124658.7
(22) Anmeldetag: 19.12.1990
(51) Int. Cl.: F16C 13/00, D21G 1/00

(54) **Durchbiegungseinstellwalze**
Deflection-controlled roll
Rouleau à règlage de flexion

(30) Priorität: 20.03.1990 CH 915/90
(43) Veröffentlichungstag der Anmeldung: 25.09.1991
(73) Patentinhaber: SULZER-ESCHER WYSS GMBH, D-88183 Ravensburg (DE)
(72) Erfinder: Biondetti, Mario, I-36015 Schio (Vicenza) (IT)

(56) Entgegenhaltungen:
- EP-A- 0 241 442
- EP-A- 0 248 738
- EP-A- 0 296 006
- GB-A- 2 143 302

## Beschreibung

Die Erfindung betrifft eine Durchbiegungseinstellwalze mit einem um einen drehfesten Träger rotierbaren, gegen den Träger mit wenigstens einer in einer Preßebene eine Preßkraft ausübenden Stützeinrichtung abgestützten über seine ganze Länge in Preßkraftrichtung beweglichen Walzenmantel, wobei etwa an den Enden des Walzenmantels Einrichtungen zur Erzeugung eines Drehmomentes mit einer Achse senkrecht zur Preßebene vorgesehen sind

Durchbiegungseinstellwalzen sind beispielsweise aus den US 3 802 044 oder US 3 885 283 bekannt. Bei diesen Walzen ist der Walzenmantel mittels einer Reihe von hydrostatischen Stützelementen gegenüber dem drehfesten Träger abgestützt. Es ist jedoch auch bekannt, den Walzenmantel mit einem oder mehreren andersartigen Stützeinrichtungen wie hydrodynamischen, magnetischen oder anderen Stützelementen oder mit einem oder mehreren Druckräumen über seine Länge gegenüber dem Träger abzustützen. Dabei kann es sich sowohl um Walzen handeln, bei welchen die Enden des Walzenmantels zum Beispiel mit Pendellagern auf dem Träger gelagert sind, oder aber um solche Walzen, bei denen auch die Enden des Walzenmantels zumindest in Preßrichtung frei beweglich oder mittels einer Führungsvorrichtung geführt sind.

Es hat sich bei solchen Walzen als vorteilhaft erwiesen, zusätzlich zu der Preßwirkung der Stützelemente an den Enden des Walzenmantels Einrichtungen vorzusehen, welche gezielt an den Walzenmantelenden ein Kraft- oder Drehmoment mit einer Achse senkrecht zur Preßebene zu erzeugen vermögen. Die Aufbringung eines solchen Drehmomentes auf den Walzenmantel über die Trägerenden ist jedoch bei vorbekannten Walzen mit störenden Nachteilen verbunden.

Aus der DE 2 325 721 ist es z.B. bekannt, an den Enden des Walzenmantels zu den radial wirkenden Stützelemenen axial versetzte, ebenfalls radial, jedoch in Gegenrichtung wirkende Stützelemente vorzusehen. Bei gleichzeitigem Betrieb der Gegenstützelemente und der benachbarten Stützelemente wird hierdurch gezielt an den Enden des Walzenmantels das gewünschte Drehmoment erzeugt. Nachteilig ist hierbei, daß durch die von den Gegenstützelementen und den Stützelementen auf den Walzenmantel ausgeübten Preßkräfte der Walzenmantel in schwer beherrschbarer Weise deformiert und an den verschiedenen Einwirkungsstellen undefiniert ovalisiert wird. Außerdem ist das damit erzeugbare Kraft- oder Drehmoment in seiner Größe begrenzt.

Aus US 4 757 585 oder aus EP 241 442 sind ebenfalls Durchbiegungseinstellwalzen bekannt, bei denen die am Walzenmantelende radial in Gegenrichtung wirkenden Stützelemente nicht direkt auf den Walzenmantel einwirken, sondern auf die zylindrische Innenfläche einer in die Enden des Walzenmantels eingeschobenen Hülse, bzw. axial auf einen Ansatz an den Walzenmantel-Enden, der außerhalb des Mantels die Lagerungen auf dem Träger trägt. Nachteilig ist hierbei die komplizierte Konstruktion, sowie der für die Hülse erforderliche Platzbedarf, welcher eine Schwächung des Trägers am Walzenmantelende erfordert.

Die in diesem Zusammenhang auch vorgeschlagene Verwendung von in Achsrichtung des Trägers wirkenden Stützelementen ist bei Walzen mit einem über seine ganze Länge in Preßkraftrichtung beweglichen Walzenmantel wegen der dabei wirkenden Kräfte in Bezug auf die Führung des Walzenmantels in dieser Ausführung nicht verwendbar.

Die Erfindung stellt sich die Aufgabe, unter Vermeidung der vorstehend angeführten Nachteile des Standes der Technik eine Durchbiegungseinstellwalze der eingangs genannten Art zu schaffen, bei welcher an den Walzenmantelenden ein größeres Drehmoment auf konstruktiv einfachere Weise und unter Vermeidung einer Deformation des Walzenmantels eingebracht werden kann.

Erfindungsgemäß wird diese Aufgabe dadurch gelöst, daß die Einrichtungen zur Erzeugung eines Drehmomentes wenigstens ein Paar von etwa angenähert in Achsenrichtung des Trägers in Abstand zur Trägerachse entgegensetzt wirkenden Kraftelementen aufweist, die Kraftelemente zwischen wenigstens einem am Träger vorgesehenen Flansch und wenigstens einem am Walzenmantel vorgesehenen Ring angeordnet sind und in Achsenrichtung sowohl außerhalb als auch innerhalb des Flansches mindestens je ein Kraftelement mit einander entgegengesetzter Wirkrichtung vorgesehen ist, wobei die beiden Kraftelemente auf je einen Ring abgestützt sind, die auf beiden Seiten des Flansches vorgesehen sind.

Dadurch dass die Kraftelemente axial, anstatt radial wirken, wird eine Walzenmanteldeformation, d.h. eine Abweichung von der Rundform vermieden, so dass keine Ungleichförmigkeit der Linienkraft im Spalt entsteht, ohne dass eine aufwendige Konstruktion erforderlich ist. Bei geringem Platzbedarf lässt sich hiermit zudem ein grösseres Drehmoment erzeugen.

Besonders vorteilhaft ist es, wenigstens zwei auf verschiedenen Seiten des Trägers angeordnete Paare von parallel zur Achsenrichtung des Trägers wirkenden, Kraftelementen vorzusehen, so dass ein grösstmöglicher Hebelarm zur Drehmoment-Erzeugung zur Verfügung steht. Dabei sind die Lager der Führungsvorrichtung von Axialkräften entlastet, wenn nicht derartige Lager überhaupt entbehrlich werden.

Von Vorteil ist es dabei ausserdem, dass die beiden Kraftelemente-Paare parallel zur Trägerachse versetzt sind, jedoch nicht in Achsenrichtung, so dass in Achsenrichtung kein unnötiger Platz benötigt wird.

Mit Vorteil können die Kraftelemente zwischen einem auf den Träger aufgesetzten Flansch und einem in das Ende des Walzenmantels eingesetzten Ring angeordnet sein. Besonders vorteilhaft ist es, den Flansch in der Mitte von zwei in gewissem axialen Abstand am Walzenmantelende vorgesehenen Ringen vorzusehen, wobei Presselemente in beiden Richtungen parallel zur Achse wirken, wobei stets die in einer Richtung wirkenden pressseitigen Kraftelemente zusammen mit den in Gegenrichtung wirkenden Kraftelementen auf der Gegenseite , also jeweils kreuzweise miteinander gesteuert sind.

Die Erfindung wird anhand der beiliegenden Figuren näher erläutert. Es zeigen:
- Fig. 1: eine Walzvorrichtung mit einer Durchbiegungseinstellwalze im Schnitt entlang der Pressebene,
- Fig. 2a: das Ende der Durchbiegungseinstellwalze im Schnitt entlang der Pressebene,
- Fig. 2b: eine Variante der Walze nach Fig. 2a,
- Fig. 3 a und b: Radialschnitte von Ausführungen der Durchbiegungseinstellwalze in der Ebene A-A in Fig. 2a,
- Fig. 4: einen schematischen Axialschnitt einer Durchbiegungseinstellwalze.

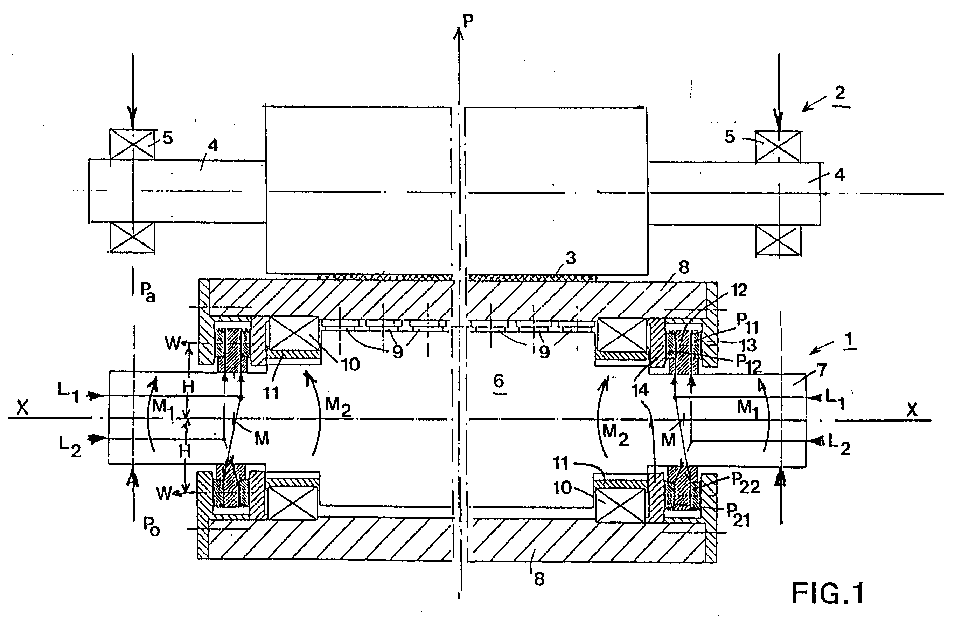

Bei der in Fig. 1 dargestellten Walzvorrichtung wirkt eine Durchbiegungseinstellwalze 1 mit einer Gegenwalze 2 zusammen und übt in einer Pressebene P auf eine zwischen den beiden Walzen 1 und 2 hindurchgeführte Warenbahn 3 eine Presskraft aus. Die Gegenwalze 2 kann als konventionelle Walze ausgeführt sein, deren Zapfen 4 mittels Lagern 5 in einer nicht dargestellten Stuhlung gelagert sind. Ueber die Lager 5 kann eine Anstellkraft auf die Gegenwalze 2 ausgeübt werden, wobei an den Zapfen und Enden der Gegenwalze 2 ein Drehmoment entsteht.

Die Durchbiegungseinstellwalze 1 weist einen Träger 6 auf, dessen Enden 7 in der Stuhlung drehfest, jedoch in gewissem Masse schwenkbar, beispielsweise mittels Gelenken gelagert ist. Um diesen Träger 6 ist ein Walzenmantel 8 rotierbar, der gegen den Träger 6 mit einer Reihe von Stützeinrichtungen 9 abgestützt ist, mit welchen eine Stützkraft auf den Walzenmantel 8 und gegen die Gegenwalze 2 ausübbar ist, wobei die Warenbahn 3 die gewünschte Pressbehandlung erfährt.

Die Stützeinrichtungen 9 können beispielsweise als hydrostatische Stützelemente ausgeführt sein, wie beispielsweise in US-A-3 802 044 beschrieben. Sie können jedoch auch in anderer Weise ausgeführt sein, beispielsweise als hydrodynamische, magnetische oder mit Federkraft arbeitende Stützelemente oder als Druckkissen oder Druckräume. Dabei kann über die ganze Walzenbreite eine einzige Stützeinrichtung beispielsweise in der Form einer Stützleiste oder einer Druckkammer vorgesehen sein, oder aber einer Reihe von in Achsenrichtung nebeneinander angeordneten Stützelementen, was den Vorteil einer individuellen Steuerbarkeit der Presskraft über die Walzenbreite mit sich bringt.

Die Enden des Walzenmantels 8 können auf dem Träger 6 in Pressrichtung in einem gewissen Spielraum frei beweglich sein, indem die Enden des Walzenmantels 8 mittels Pendelrollenlagern 10 auf einer gegenüber dem Träger 6 radial verschiebbaren Führungsvorrichtung 11 gelagert sind, wie aus US-A-3 885 283 ersichtlich.

Um die von den Zapfenauflagekräften der Gegenwalze 2 herrührenden Drehmomente auszugleichen und die Biegelinien der beiden zusammenwirkenden Walzen 1 und 2 optimal aneinander anpassen zu können, sind Einrichtungen zur Erzeugung eines Drehmomentes mit einer Achse M senkrecht zur Pressebene P etwa an den Enden des Walzenmantels 8 ausserhalb der Lager 10 vorgesehen. Diese Einrichtungen weisen Kraftelemente P₁₁, P₁₂, P₂₁ und P₂₂ auf. Dabei sind sowohl auf der Pressseite Pₐ der Durchbiegungseinstellwalze, als auch auf der Gegenseite Pₒ Kraftelemente P₁₁, P₁₂ bzw. P₂₁, P₂₂ vorgesehen, wobei die Wirkrichtungen der Kraftelemente in Achsenrichtung X der Durchbiegungseinstellwalze 1 bzw. deren Träger 6 gerichtet sind, jedoch in einem Abstand H von der Achse X. An jeder Stelle sind im dargestellten Ausführungsbeispiel jeweils zwei Kraftelemente vorgesehen, von denen eines P₁₁ und P₂₂ in Achsenrichtung nach aussen wirkt, während das zugeordnete Kraftelement P₁₂ bzw. P₂₁ in Achsenrichtung nach innen wirkt. Das andere Walzenende ist analog aufgebaut.

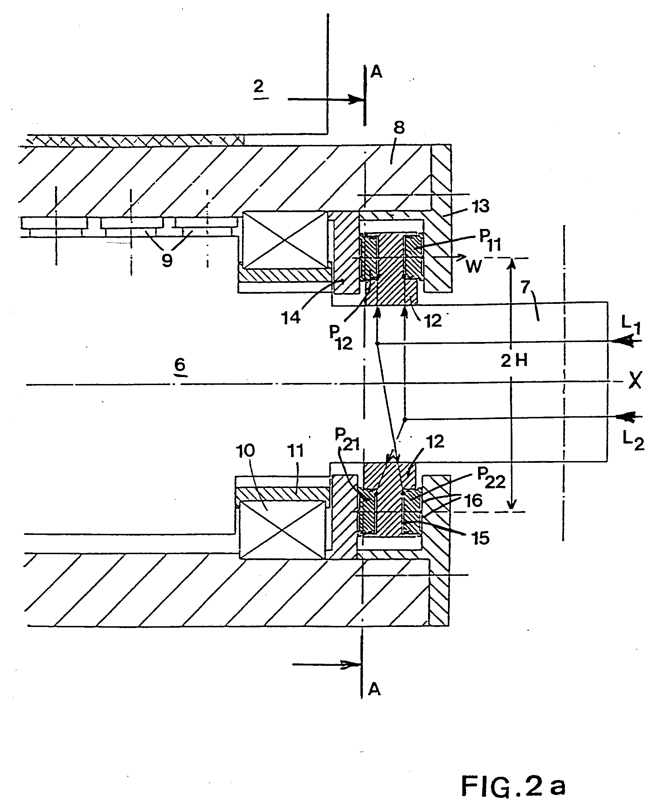

Wie insbesondere aus der vergrösserten Darstellung in Fig. 2a ersichtlich ist, liegen die Kraftelemente P₁₁, P₁₂, P₂₁ und P₂₂ zwischen einem fest auf das Ende 7 des Trägers aufgesetzten Flansch 12 und in die Enden des Walzenmantels 8 fest eingesetzten Ringen 13 und 14, wobei die nach aussen wirkenden Kraftelemente P₁₁ und P₂₂ zwischen dem Flansch 12 und dem äusseren Ring 13 angeordnet sind, während die inneren Kraftelemente P₁₂ und P₂₁ zwischen dem Flansch 12 und dem inneren Ring 14 liegen.

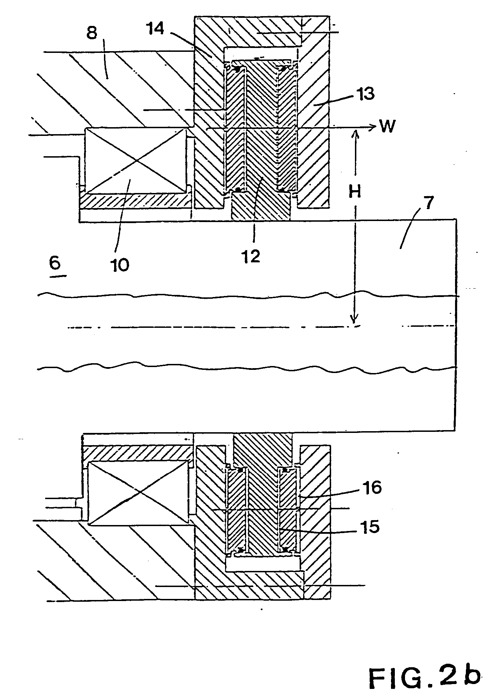

Bei der in Fig. 2b wiedergegebenen Variante sind die Ringe 13 und 14 nicht in die Enden des Walzenmantels 8 innen eingesetzt, sondern aussen aufgesetzt. Der Hebelarm 2H wird hierdurch weiter vergrössert und somit ein noch grösseres Drehmoment durch die Kraftelemente bei gleicher Presskraft derselben erzeugbar.

Die Kraftelemente können beispielsweise analog den Stützelementen 9 ebenfalls als hydrostatische Stützelemente ausgebildet sein, welche mittels eines hydrostatischen Druckraumes 15 in Wirkrichtung W, d.h. parallel zur Achsenrichtung X beweglich sind und an ihrer Vorderfläche Lagertaschen 16 aufweisen, welche vom Druckraum 15 mit hydrostatischem Druckmittel versorgt werden und eine nahezu reibungslose Bewegung des am Walzenmantel 8 befestigten Ringes 13 bzw. 14 gegenüber den Kraftelementen gestatten. Die Druckräume 15 der Kraftelemente werden über Druckmittelleitungen L₁ und L₂ mit hydraulischem Druckmittel steuerbaren Druckes versorgt. Hierbei sind die Druckräume 15 der pressseitigen und gegenseitigen Kraftelemente kreuzweise miteinander verbunden, d.h. der Druckraum von P₁₁ mit dem Druckraum von P₂₁, sowie umgekehrt der Druckraum von P₁₂ mit dem Druckraum von P₂₂. Werden nun die Druckräume 15 der Kraftelemente P₁₁ und P₂₁ über die Leitung 2 mit Druckmittel versorgt, während die Leitung L₁ drucklos bleibt, so üben die Kraftelemente P₁₁ und P₂₁ mittels des Hebelarmes 2H ein gleichsinniges Drehmoment mit einer Achse senkrecht zur Pressebene auf die Enden des Walzenmantels 8 aus. Andererseits entsteht ein Drehmoment M₁ in umgekehrter Richtung, wenn die Druckräume 15 der Kraftelemente p₁₂ und P₂₂ gleichzeitig über die Leitung L₁ mit Druckmittel beaufschlagt werden. Auf diese Weise lässt sich an den Walzenmantelenden gezielt ein einstellbares Drehmoment erzeugen, wobei für die notwendigen Hebelarme kein zusätzlicher Platz in Achsenrichtung benötigt wird und keine Deformation des Walzenmantels durch Radialkräfte, d.h. keine Abweichung von der Rundform, eintritt.

Die Kraftelemente können jedoch auch in anderer Weise ausgebildet sein, z.B. als hydraulisch anpressbare Stützelemente mit hydrodynamisch geschmierten Lagerflächen oder Wälzlagern, sofern die Ansteuerung wie vorstehend beschrieben erfolgt, so dass ein Drehmoment entsteht.

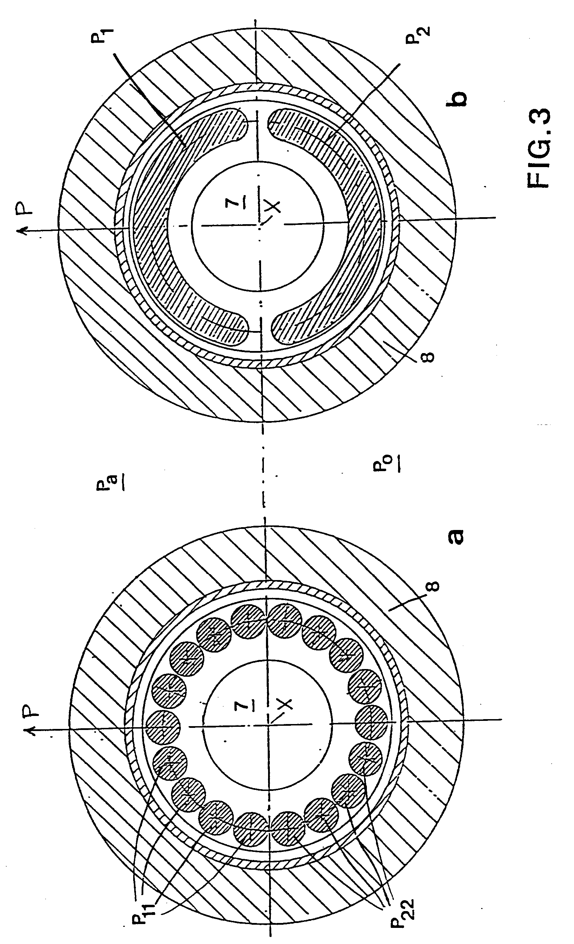

Wie aus dem Radialschnitt in Fig. 3a ersichtlich ist, können über den Umfang des Ringes 12 verteilt sowohl auf der Pressseite Pₐ als auch auf der Gegenseite Pₒ eine Anzahl von Kraftelementen P₁₁ bzw. P₂₂ nebeneinander vorgesehen sein, wobei die Druckräume der Kraftelemente P₁₁ auf der einen Seite Pₐ miteinander verbunden sind, und ebenso die Druckräume der Presselemente P₂₂ auf der anderen Seite Pₒ. Diese Anordnung hat den Vorteil, dass konventionelle hydrostatische Kraftelemente mit etwa kreisförmigem Druckraumquerschnitt vorgesehen sein können und trotzdem das grösstmögliche Drehmoment erzeugbar ist.

Wie in Fig. 3b dargestellt, kann jedoch auch auf jeder Seite Pₐ bzw. Pₒ jeweils nur ein einziges Kraftelement P₁ bzw. P₂ mit langgestreckter, etwa halbkreisförmig gekrümmter Form vorgesehen sein.

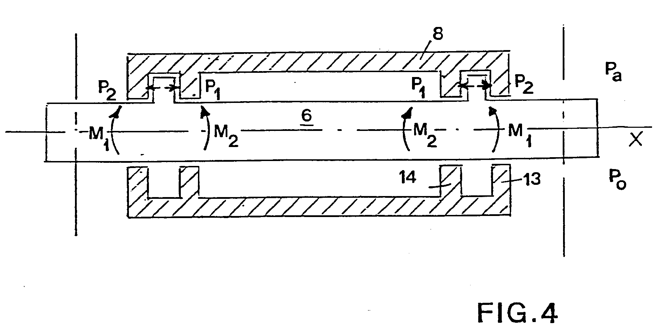

Während in den Fig. 1 - 3 an jedem Ende des Walzenmantels 8 jeweils zwei Paare von Kraftelementen vorgesehen sind, lässt sich das gewünschte Drehmoment an den Enden des Walzenmantels, wie in Fig. 4 in schematischer Form dargestellt, jedoch auch mit einer geringeren Anzahl von Kraftelementen erzeugen.

Beim Ausführungsbeispiel nach Fig. 4 sind lediglich auf der Pressseite Pₐ Kraftelemente P₁ nach innen wirkend und P₂ nach aussen wirkend vorgesehen, während auf der Gegenseite Pₒ keine Kraftelemente vorhanden sind. Auch hier entsteht bei Beaufschlagung der nach innen wirkenden Kraftelemente P₁ an beiden Walzenmantelenden gleichzeitig ein Drehmoment M₁ an beiden Enden, hingegen bei Beaufschlagung der nach aussen wirkenden Kraftelemente P₂ das entgegengesetzte Drehmoment M₂.

Die Kraftelemente P₁₁ und P₂₁ können auch gleichzeitig angesteuert sein, jedoch mit unterschiedlichem Druck, wo sie mit separaten Druckleitungen für jedes Kraftelement verbunden sind. Das gleiche gilt für die Kraftelemente P₁₂ und P₂₂.

## Patentansprüche

1. Durchbiegungseinstellwalze (1) mit einem um einen drehfesten Träger (6) rotierbaren, gegen den Träger (6) mit wenigstens einer in einer Preßebene (P) eine Preßkraft ausübenden Stützeinrichtung (9) abgestützten über seine ganze Länge in Preßkraftrichtung beweglichen Walzenmantel (8), wobei etwa an den Enden des Walzenmantels (8) Einrichtungen zur Erzeugung eines Drehmomentes (M₁, M₂) mit einer Achse (M) senkrecht zur Preßebene (P) vorgesehen sind,
**dadurch gekennzeichnet**,
daß die Einrichtungen zur Erzeugung eines Drehmomentes (M₁, M₂) wenigstens ein paar von etwa angenähert in Achsenrichtung (X) des Trägers (6) in Abstand (H) zur Trägerachse (X) entgegengesetzt wirkenden Kraftelementen (P₁, P₂, P₁₁, P₁₂, P₂₁, P₂₂) aufweist, die Kraftelemente (P₁, P₂, P₁₁, P₁₂, P₂₁, P₂₂) zwischen wenigstens einem am Träger (6) vorgesehenen Flansch (12) und wenigstens einem am Walzenmantel (8) vorgesehenen Ring (13, 14) angeordnet sind und in Achsenrichtung sowohl außerhalb als auch innerhalb des Flansches (12) mindestens je ein Kraftelement (P₁₁, P₁₂, P₂₁, P₂₂) mit einander entgegengesetzter Wirkrichtung vorgesehen ist, wobei die beiden Kraftelemente (P₁₁, P₁₂; P₂₁, P₂₂) auf je einem Ring (13, 14) abgestützt sind, der auf beiden Seiten des Flansches (12) vorgesehen ist.

2. Walze nach Anspruch 1,
**dadurch gekennzeichnet**,
daß wenigstens zwei auf verschiedenen Seiten (Pₐ, Pₒ) des Trägers (6) angeordnete paare von etwa parallel zur Achsenrichtung (X) des Trägers (6) wirkenden Kraftelementen (P₁, P₂; P₁₁, P₂₁; P₁₂, P₂₂) vorgesehen sind.

3. Walze nach Anspruch 1,
**dadurch gekennzeichnet**,
daß jeweils ein paar von etwa parallel zur Achsenrichtung (X) des Trägers (6) wirkenden Kraftelementen (P₁, P₂) etwa an einem Ende des Walzenmantels und das andere Paar etwa am anderen Ende des Walzenmantels (8) mit entgegengesetzter Preßrichtung vorgesehen ist.

4. Walze nach einem der Ansprüche 1 bis 3,
**dadurch gekennzeichnet**,
daß die Kraftelemente (P₁₁, P₁₂; P₂₁, P₂₂) derart angesteuert sind, daß die auf der Preßseite Pₐ) vorgesehenen Kraftelemente (P₁₁, P₁₂) auf die Ringe (13, 14) eine Preßkraft in vorbestimmter Richtung ausüben, die auf der Gegenseite (Po) vorgesehenen Kraftelementen (P₂₁, P₂₂) jedoch eine Preßkraft, die entgegengesetzt gerichtet ist.

5. Walze nach einem der Ansprüche 1 bis 4,
**dadurch gekennzeichnet**,
daß die Kraftelemente (P₁₁, P₁₂) auf der Preßseite (Pₐ) und die entsprechenden Kraftelemente (P₂₁, P₂₂) auf der Gegenseite Pₒ) mit separaten Druckleitungen verbunden und mit unterschiedlichem Druck ansteuerbar sind.

6. Walze nach einem der Ansprüche 1 bis 5, ,
**dadurch gekennzeichnet**,
daß die jeweils am Ende des Walzenmantels (8) angeordneten und ein Drehmoment (M₁, M₂) erzeugenden Kraftelemente (P₁₁, P₂₁ und P₁₂, P₂₂) miteinander angesteuert werden.

7. Walze nach einem der Ansprüche 1 bis 6,
**dadurch gekennzeichnet**,
daß die Kraftelemente (P₁₁, P₁₂; P₂₁, P₂₂) als hydrostatische Kraftelemente ausgebildet sind, welche auf einem vom Träger (6) aus mit hydraulischem Druckmittel versorgbaren Druckraum (15) etwa parallel zur Achsenrichtung (X) verschiebbar sind und mit dem Druckraum (15) verbundene hydrostatische Lagerflächen (16) für mit dem Walzenmantel (8) verbundene Teile aufweisen.

8. Walze nach einem der Ansprüche 1 bis 7,
**dadurch gekennzeichnet**,
daß der Walzenmantel (8) auf einer drehfesten, zumindest in Preßrichtung (P) gegenüber dem Träger (6) verschiebbaren Führungsvorrichtung (11) gelagert ist.

9. Walze nach einem der Ansprüche 1 bis 8,
**dadurch gekennzeichnet**,
daß die Einrichtungen zur Erzeugung eines Drehmomentes (M₁, M₂) im Bereich zwischen dem Ende des Walzenmantels (8) und dem Lager (10) angeordnet sind.

## Claims

1. A deflection compensation roll (1) having a roller shell (8) which is rotatable about a stationary support (6) and which is supported against the support (6) by at least one supporting means (9) which exerts a pressure force in a pressing plane (P) and which is moveable over its entire length in the direction of the pressure force, with means for generating a torque (M₁, M₂) having an axis (M) perpendicular to the pressing plane (P) being provided approximately at the ends of the roller shell (8),
characterised in that
the means for generating a torque (M₁, M₂) have at least one pair of force elements (P₁, P₂, P₁₁, P₁₂, P₂₁, P₂₂) which act in opposite directions approximately in the axial direction (X) of the support (6) at a distance (H) from the support axis (X), the force elements (P₁, P₂, P₁₁, P₁₂, P₂₁, P₂₂) are located between at least one flange (12) provided on the support (6) and at least one ring (13, 14) provided on the roller shell (8) and at least one force element (P₁₁, P₁₂, P₂₁, P₂₂) each time is provided with an opposed direction of action in the axial direction both outside and inside the flange (12), the two force elements (P₁₁, P₁₂; P₂₁, P₂₂) being supported on one ring (13, 14) each time which is provided on either side of the flange (12).

2. A roller according to Claim 1, characterised in that at least two pairs of force elements (P₁, P₂; P₁₁, P₂₁; P₁₂, P₂₂) acting approximately parallel to the axial direction (X) of the support (6) are provided which are located on different sides (Pₐ, Pₒ) of the support (6).

3. A roller according to Claim 1, characterised in that one pair of force elements (P₁, P₂) acting approximately parallel to the axial direction (X) of the support (6) are provided in each case approximately at one end of the roller shell and the other pair is provided approximately at the other end of the roller shell (8) with an opposing direction of pressing.

4. A roller according to one of Claims 1 to 3, characterised in that the force elements (P₁₁, P₁₂; P₂₁, P₂₂) are driven such that the force elements (P₁₁, P₁₂) provided on the pressing side Pₐ) exert on the rings (13, 14) a pressing force in a predetermined direction, but the force elements (P₂₁, P₂₂) provided on the opposite side (Pₒ) exert a pressure in the opposite direction.

5. A roller according to one of Claims 1 to 4, characterised in that the force elements (P₁₁, P₁₂) on the pressing side (Pₐ) and the corresponding force elements (P₂₁, P₂₂) on the opposite side Pₒ) are connected to separate pressure lines and can be driven at different pressures.

6. A roller according to one of Claims 1 to 5, characterised in that the force elements (P₁₁, P₂₁ and P₁₂, P₂₂) which are arranged at each end of the roller shell (8) and which exert a torque (M₁, M₂) are driven jointly.

7. A roller according to one of Claims 1 to 6, characterised in that the force elements (P₁₁, P₁₂; P₂₁, P₂₂) are constructed as hydrostatic force elements which can be displaced on a pressure chamber (15), which can be supplied with hydraulic pressure medium from the support (6), approximately parallel to the axial direction (X) and which have hydrostatic bearing surfaces (16) connected to the pressure chamber (15) for parts which are connected to the roller shell (8).

8. A roller according to one of Claims 1 to 7, characterised in that the roller shell (8) is mounted on a stationary guide device (11) which can be displaced relative to the support (6) at least in the direction of pressing (P).

9. A roller according to one of Claims 1 to 8, characterised in that the means for generating a torque (M₁, M₂) are located in the region between the end of the roller shell (8) and the bearing (10).

## Revendications

1. Cylindre à réglage de flexion (1) avec un bandage de cylindre (8) rotatif autour d'un support non rotatif (6), appuyé contre le support (6) par au moins un dispositif d'appui (9) exerçant une force de pressage dans un plan de pressage (P), ce bandage (8) étant mobile sur toute sa longueur dans le sens de la force de pressage, des dispositifs pour produire un couple (M₁, M₂) avec un axe (M) perpendiculaire au plan de pressage (P) étant prévus approximativement aux extrémités du bandage (8) du cylindre, **caractérisé** en ce que les dispositifs pour produire un couple (M₁, M₂) présentent au moins une paire d'éléments de force (P₁, P₂, P₁₁, P₁₂, P₂₁, P₂₂) agissant dans des sens opposés, approximativement dans le sens axial (X) du support (6) en étant disposés à une distance (H) de l'axe (X) du support, les éléments de force (P₁, P₂, P₁₁, P₁₂, P₂₁, P₂₂) étant disposés entre au moins un collet (12) prévu sur le support (6) et au moins une bague (13, 14) prévue sur le bandage (8) du cylindre, au moins un élément de force (P₁₁, P₁₂, P₂₁, P₂₂) étant prévu dans le sens axial aussi bien à l'extérieur du collet (12) qu'à l'intérieur de celui-ci, chaque fois avec un sens d'action opposé l'un à l'autre, les deux éléments de force (P₁₁, P₁₂; P₂₁, P₂₂) étant appuyés respectivement sur une bague (13, 14) prévue de part et d'autre du collet (12).

2. Cylindre selon la revendication 1, caractérisé en ce que sont prévues au moins deux paires d'éléments de force (P₁, P₂; P₁₁, P₂₁; P₁₂, P₂₂) disposés sur des côtés différents (Pₐ, Pₒ) du support (6) agissant à peu près parallèlement au sens axial (X) du support (6).

3. Cylindre selon la revendication 1, caractérisé en ce qu'il est prévu respectivement une paire d'éléments de force (P₁, P₂) agissant à peu près parallèlement au sens axial (X) du support (6), à peu près à une extrémité du bandage du cylindre, et l'autre paire à peu près à l'autre extrémité du bandage (8) du cylindre, avec un sens de pressage opposé.

4. Cylindre selon une des revendications 1 à 3, caractérisé en ce que les éléments de force (P₁₁, P₁₂; P₂₁, P₂₂) sont commandés de telle manière que les éléments de force (P₁₁, P₁₂) prévus sur le côté de pressage (Pₐ) exercent sur les bagues (13, 14) une force de pressage dans un sens prédéterminé, laquelle force est toutefois une force de pressage dirigée en sens opposé à celle des éléments de force (P₂₁, P₂₂) prévus sur le côté opposé (Pₒ).

5. Cylindre selon une des revendications 1 à 4, caractérisé en ce que les éléments de force (P₁₁, P₁₂) sur le côté de pressage (Pₐ) et les éléments de force correspondants (P₂₁, P₂₂) sur le côté opposé (Pₒ) sont reliés à des conduites sous pression séparées et peuvent être commandés à des pressions différentes.

6. Cylindre selon une des revendication 1 à 5, caractérisé en ce que les éléments de force (P₁₁, P₂₁ et P₁₂, P₂₂) disposés respectivement à l'extrémité du bandage (8) du cylindre et produisant un couple (M₁, M₂) sont commandés ensemble.

7. Cylindre selon une des revendications 1 à 6, caractérisé en ce que les éléments de force (P₁₁, P₁₂; P₂₁, P₂₂) sont sous la forme d'éléments hydrostatiques qui sont coulissants sur une chambre de pression (15) alimentée en fluide hydraulique à partir du support (6), en coulissant à peu près parallèlement au sens axial (X), et qui présentent des portées hydrostatiques (16) reliées à la chambre de pression (15) pour des pièces reliées au bandage (8) du cylindre.

8. Cylindre selon une des revendications 1 à 7, caractérisé en ce que le bandage (8) du cylindre repose sur un dispositif de guidage (11) non rotatif, coulissant au moins dans le sens de pressage (P) par rapport au support (6).

9. Cylindre selon une des revendications 1 à 8, caractérisé en ce que les dispositifs pour la production d'un couple (M₁, M₂) sont disposés dans la zone entre l'extrémité du bandage (8) du cylindre et le roulement (10).
